# EUROPEAN PATENT APPLICATION

(11) **EP 2 842 698 A1**
(43) Date of publication of application: **04.03.2015**
(21) Application number: 12875443.9
(22) Date of filing: 24.04.2012
(51) Int. Cl.: B25J 19/00

(54) **GRAVITY COMPENSATION MECHANISM AND ROBOT**

(71) Applicant: Kabushiki Kaisha Yaskawa Denki, Kitakyushu-shi, Fukuoka 806-0004 (JP)
(72) Inventor: YAMAGUCHI, Go, Kitakyushu-shi Fukuoka 806-0004 (JP)
(74) Representative: Viering, Jentschura & Partner Patent- und Rechtsanwälte
(86) International application number: PCT/JP2012/060962
(87) International publication number: WO 2013/161006

(57) **Abstract**

Provided is a gravity compensation mechanism 30 and a robot 10 allowing a high flexibility in designing gravity compensation torque property.

The gravity compensation mechanism 30 includes a first non-circular gear 31 configured to rotate about a rotation axis L of an arm part 14 of the robot 10 together with the arm part 14, a second non-circular gear 32 driven by the first non-circular gear 31, and an extension/contraction body 34 configured to extend and contract to produce force as the second non-circular gear 32 rotates, one end portion of the extension/contraction body 34 being connected to the second non-circular gear 32.

## Description

### Technical Field

The present invention relates to a gravity compensation mechanism and a robot.

### Background Art

In Patent Literature 1, a gravity balancing device that reduces torque, in a wide operational range, required of a driving motor used in an arm device of a multiple-joint robot or the like operated in the direction of the action of gravity is described.

### Citation List

### Patent Literature

Patent Literature 1: Japanese Patent Application Laid-Open No. H5-69378

### Summary of Invention

### Technical Problem

It is generally desired that the output torque property of a gravity compensation mechanism (gravity compensation torque property) is set as intended by a designer.

The object of the present invention is to provide a gravity compensation mechanism and a robot with a high flexibility in designing a gravity compensation torque property.

### Solution to Problem

To solve the above problem, according to an aspect of the present invention, a gravity compensation mechanism is applied which includes a first non-circular gear configured to rotate about a rotation axis of an arm part of a robot together with the arm part, a second non-circular gear driven by the first non-circular gear, and an extension/contraction body configured to extend and contract to produce force as the second non-circular gear rotates, one end portion of the extension/contraction body being connected to the second non-circular gear.

According to another aspect, a robot including a gravity compensation mechanism is applied, in which the gravity compensation mechanism includes a first non-circular gear configured to rotate about a rotation axis of an arm part of the robot together with the arm part, a second non-circular gear driven by the first non-circular gear, and an extension/contraction body configured to extend and contract to produce force as the second non-circular gear rotates, one end portion of the extension/contraction body being connected to the second non-circular gear.

### Advantageous Effects of Invention

The present invention provides a high flexibility in designing gravity compensation torque property.

### Brief Description of Drawings

Fig. 1 is an explanatory drawing of a robot according to a first exemplary embodiment of the present invention.
Fig. 2 is a basic structural drawing schematically illustrating a gravity compensation mechanism of the robot.
Fig. 3 is an explanatory drawing of an exemplary modification of a second non-circular gear of the gravity compensation mechanism of the robot.
Fig. 4A is a first explanatory drawing of operation of the robot.
Fig. 4B is a second explanatory drawing of operation of the robot.
Fig. 4C is a third explanatory drawing of operation of the robot.
Fig. 5 is an explanatory drawing illustrating a reduction ratio of non-circular gears of the gravity compensation mechanism of the robot.
Fig. 6A is an explanatory drawing illustrating a first exemplary configuration of the gravity compensation mechanism of the robot.
Fig. 6B is an explanatory drawing illustrating a second exemplary configuration of the gravity compensation mechanism of the robot.
Fig. 7A is an explanatory drawing of the robot mounted on a ceiling.
Fig. 7B is an explanatory drawing of the robot mounted on a wall.
Fig. 8 is an explanatory drawing illustrating a front view of a robot according to a second exemplary embodiment of the present invention.

### Description of Embodiments

An exemplary embodiment embodying the present invention will be described referring to the attached drawings to promote understanding of the present invention. In each of the drawings, the part which is not related to the description may be omitted.

### First Exemplary Embodiment

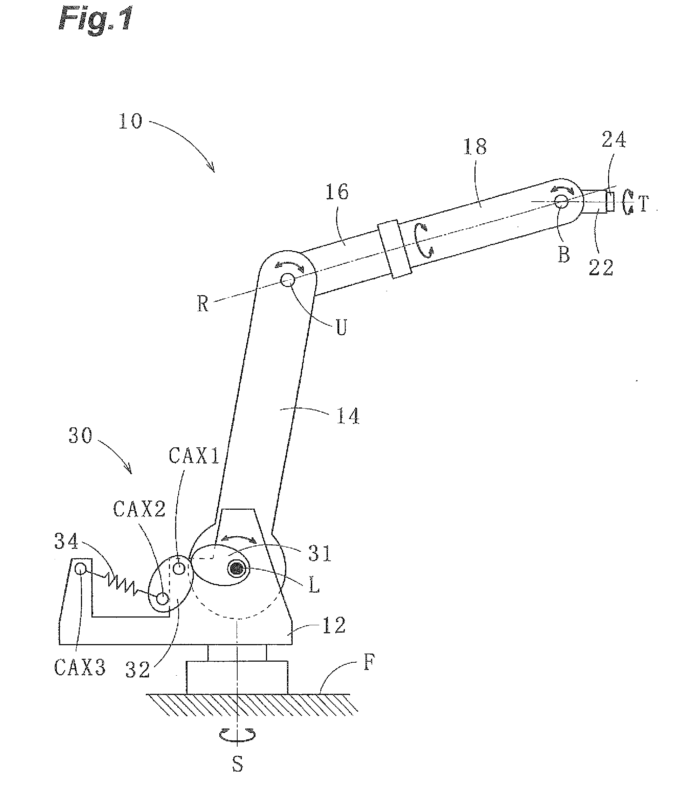

A robot 10 according to a first exemplary embodiment of the present invention is, for example, an industrial robot with six axes as illustrated in Fig. 1.

The robot 10 includes a swing part 12 mounted on a floor F which is a mounting surface, a first arm part 14, a second arm part 16, a third arm part 18, a wrist part 22, and a flange part 24. The robot 10 also includes a gravity compensation mechanism 30.

The swing part 12 can rotate about a pivot (rotation axis) S extending in the direction intersecting with the floor F.

One end portion of the first arm part 14 is provided on the swing part 12, and the first arm part 14 can rotate about a rotation axis L which is parallel to the floor F.

One end portion of the second arm part 16 is provided on the distal end portion of the first arm part 14, and the second arm part 16 can rotate about a rotation axis U which is parallel to the rotation axis L.

One end portion of the third arm part 18 is provided on the distal end portion of the second arm part 16, and the third arm part 18 can rotate about a rotation axis R extending in the longitudinal direction of the second arm part 16.

One end portion of the wrist part 22 is provided on the distal end portion of the third arm part 18, and the wrist part 22 can rotate about a rotation axis B which intersects with the longitudinal direction of the third arm part 18.

The flange part 24 can rotate about a rotation axis T extending along the longitudinal direction of the wrist part 22.

Fig. 1 illustrates a side view of the robot 10, and the arrow in Fig. 1 shows the direction of rotation about each axis. The rotational motion about each axis is controlled by a well-known control system using a servo motor or the like. For convenience of description, the rightward direction in a sheet of Fig. 1 is defined as the forward direction of the robot, and the leftward direction in the sheet of Fig. 1 is defined as the rearward direction of the robot.

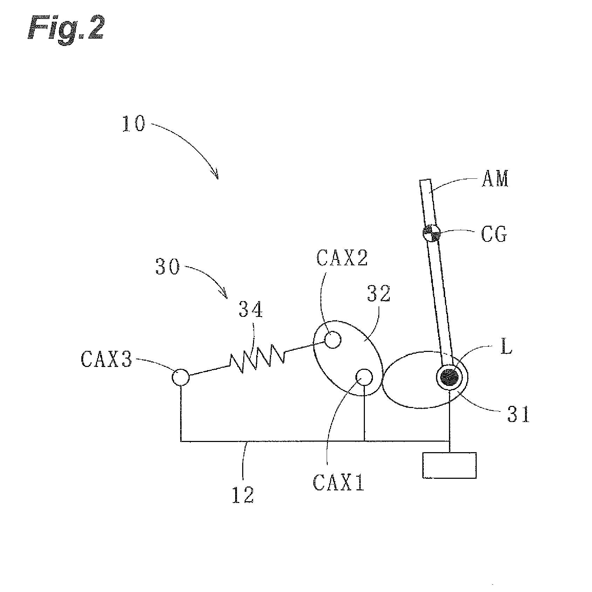

As illustrated in Fig. 2, the gravity compensation mechanism 30 includes a first non-circular gear 31 which is a driving gear, a second non-circular gear 32 which is a follower gear, and an extension/contraction body 34. In Fig. 2, the first arm part 14, the second arm part 16, the third arm part 18, the wrist part 22, and the flange part 24 are schematically illustrated together as an arm AM. The center of gravity CG of the arm AM is also illustrated in the drawing. Each gear is schematically illustrated and teeth thereof are not shown.

The first non-circular gear 31 has, for example, an elliptic shape. The first non-circular gear 31 is configured to rotate about the rotation axis L of the first arm part 14 together with the first arm part 14. The rotation axis L passes a position offset from the central portion of the first non-circular gear 31 in a front view (when viewed from the direction in which the rotation axis L of the first non-circular gear 31 extends).

The second non-circular gear 32 has, for example, an elliptic shape. The second non-circular gear 32 meshes with and is driven by the first non-circular gear 31. The second non-circular gear 32 is allowed to rotate about a coupling shaft CAX1 provided in the swing part 12. The coupling shaft CAX1 is arranged to be offset from the central portion of the second non-circular gear 32 in a front view (when viewed from the direction in which the coupling shaft CAX1, which is the rotation axis of the second non-circular gear 32, extends).

The extension/contraction body 34 can extend and contract as the second non-circular gear 32 rotates to produce force in the direction of extension and contraction. Examples of the extension/contraction body 34 include a coil spring and an air spring.

One end portion of the extension/contraction body 34 is rotatably coupled to the second non-circular gear 32 via a coupling shaft CAX2 provided in the second non-circular gear 32. The coupling shaft CAX2 is arranged at a position offset from the central portion of the second non-circular gear 32 in a front view and being the opposite side of the coupling shaft CAX1 with the central portion therebetween.

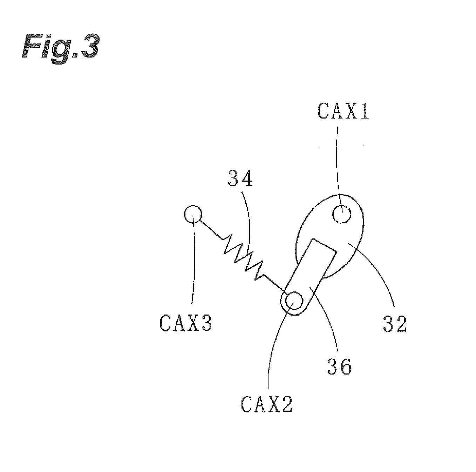

Note that, as illustrated in Fig. 3, the second non-circular gear 32 may include a connecting member 36 to which distal end portion the coupling shaft CAX2 is provided. That is, one end portion of the extension/contraction body 34 may rotatably be coupled to the second non-circular gear 32 via the coupling shaft CAX2 provided in the connecting member 36.

The other end portion of the extension/contraction body 34 is rotatably coupled to the swing part 12 via a coupling shaft CAX3 provided in the swing part 12.

Now, operation of the robot 10 will be described.

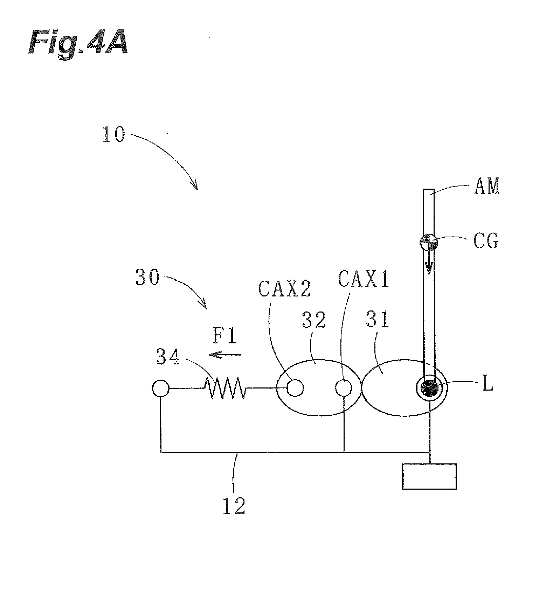

As illustrated in Fig. 4A, the second non-circular gear 32 and the extension/contraction body 34 are arranged so that the coupling shaft CAX1 and the coupling shaft CAX2 in the second non-circular gear 32 and the coupling shaft CAX3 provided in the swing part 12 are aligned when the center of gravity CG of the arm AM is positioned just above the rotation axis L, in other words, when there is no need to produce gravity compensation torque about the rotation axis L. In this state, the extension/contraction body 34 produces force F1 to pull the coupling shaft CAX2 in the linear direction defined by the coupling shaft CAX1 and the coupling shaft CAX2. The force F1 however does not act to rotate the first non-circular gear 31. So that no gravity compensation torque about the rotation axis L of the first non-circular gear 31 is produced via the second non-circular gear 32.

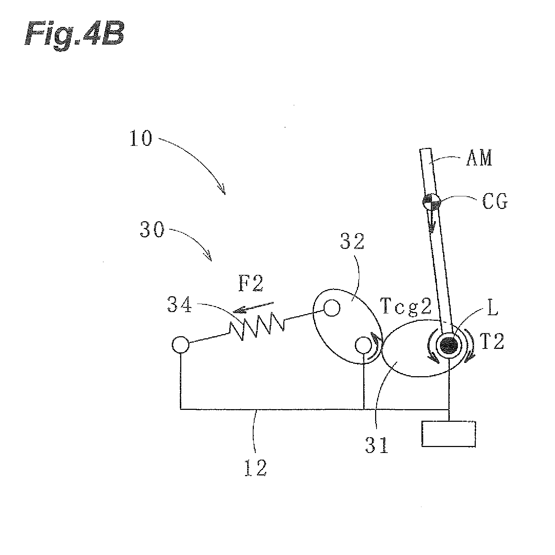

As illustrated in Fig. 4B, when the arm AM tilts rearward, the gravitational force acting on the center of gravity CG produces a gravitational torque Tcg2 about the rotation axis L. On the other hand, by the first non-circular gear 31 rotating counter-clockwise in Fig. 4B, the second non-circular gear 32 rotates clockwise to extend the extension/contraction body 34. The extended extension/contraction body 34 produces force F2 which hinders the rotation of the second non-circular gear 32. The force F2 produces a gravity compensation torque T2 about the rotation axis L via the second non-circular gear 32. The gravity compensation torque T2 cancels the gravitational torque Tcg2 produced about the rotation axis L to balance the force acting on the arm AM.

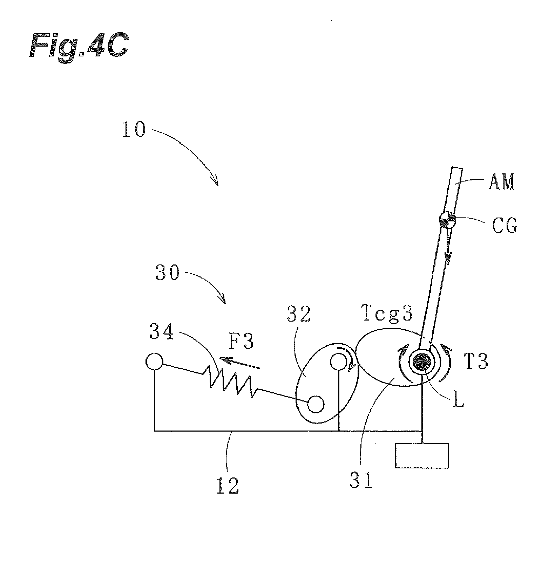

As illustrated in Fig. 4C, when the arm AM tilts forward, the gravitational force acting on the center of gravity CG produces a gravitational torque Tcg3 about the rotation axis L. On the other hand, by the first non-circular gear 31 rotating clockwise in Fig. 4C, the second non-circular gear 32 rotates counter-clockwise to extend the extension/contraction body 34. The extended extension/contraction body 34 produces force F3 which hinders the rotation of the second non-circular gear 32. The force F3 produces a gravity compensation torque T3 about the rotation axis L via the second non-circular gear 32. The gravity compensation torque T3 cancels the gravitational torque Tcg3 produced about the rotation axis L to balance the force acting on the arm AM.

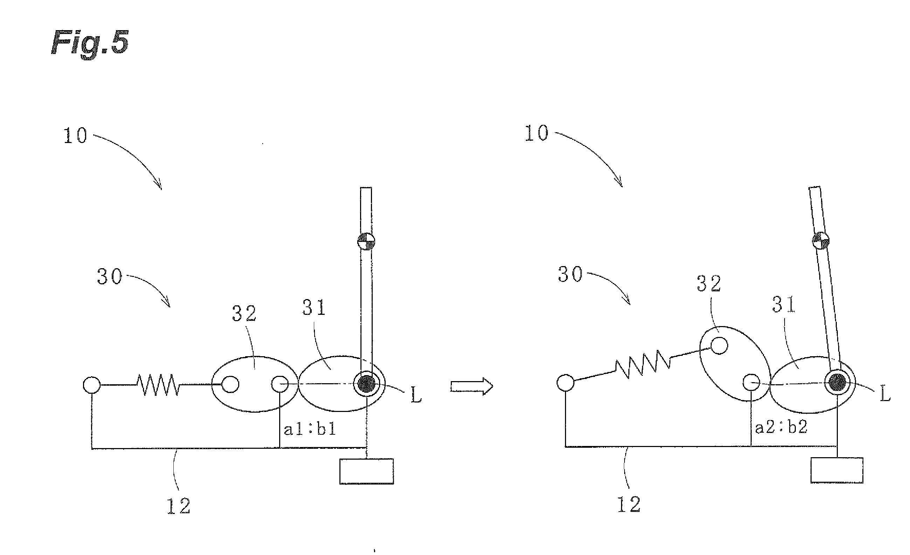

As illustrated in Fig. 5, the reduction ratio changes from a1 : b1 to a2 : b2 according to rotational positions of the first non-circular gear 31 and the second non-circular gear 32. The relationship between the rotational positions of the first non-circular gear 31 and the second non-circular gear 32 and the reduction ratio can be changed by suitably designing pitch curves of both gears 31 and 32.

A designer therefore can design the shapes of the first non-circular gear 31 and the second non-circular gear 32, once the relationship between the rotational position and the reduction ratio is determined so as to satisfy the output torque property (gravity compensation torque property) required of the gravity compensation mechanism 30. In other words, the designer can change the gravity compensation torque property by changing the shapes of the first non-circular gear 31 and the second non-circular gear 32, which means that a high flexibility in designing a gravity compensation torque property is ensured.

Further, the gravity compensation mechanism 30 is simply configured with the first non-circular gear 31 and the second non-circular gear 32 and therefore has high reliability.

The gravity compensation mechanism 30 described in the exemplary embodiment may have various exemplary configurations.

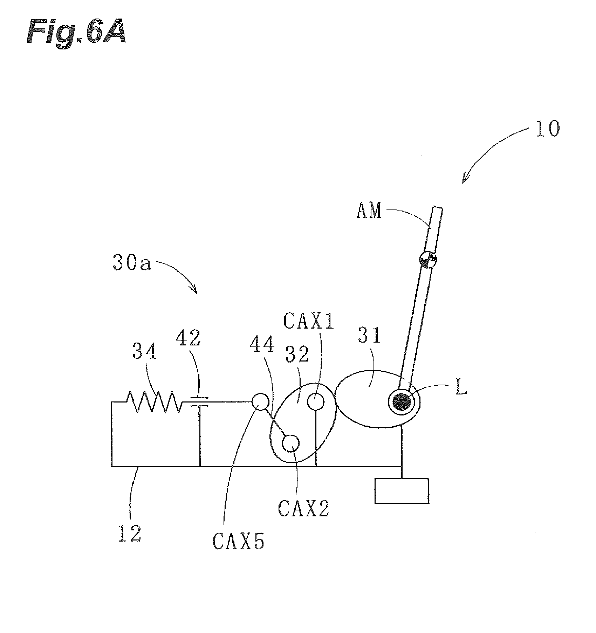

A first exemplary configuration may be a gravity compensation mechanism 30a illustrated in Fig. 6A. One end portion of an extension/contraction body 34 of the gravity compensation mechanism 30a is guided by a guide 42 along the longitudinal direction of the extension/contraction body 34 and coupled to a second non-circular gear 32 via a link 44. The other end portion of the extension/contraction body 34 is fixed to a swing part 12. One end portion of the link 44 is coupled to one end portion of the extension/contraction body 34 via a coupling shaft CAX5. The other end portion of the link 44 is coupled to the second non-circular gear 32 via a coupling shaft CAX2.

Therefore, since the rotation of the second non-circular gear 32 is transferred to the extension/contraction body 34 via the link 44, the extension/contraction body 34 extends and contracts according to the tilt of the arm AM. The gravity compensation mechanism 30a can thereby output gravity compensation torque according to a predetermined property.

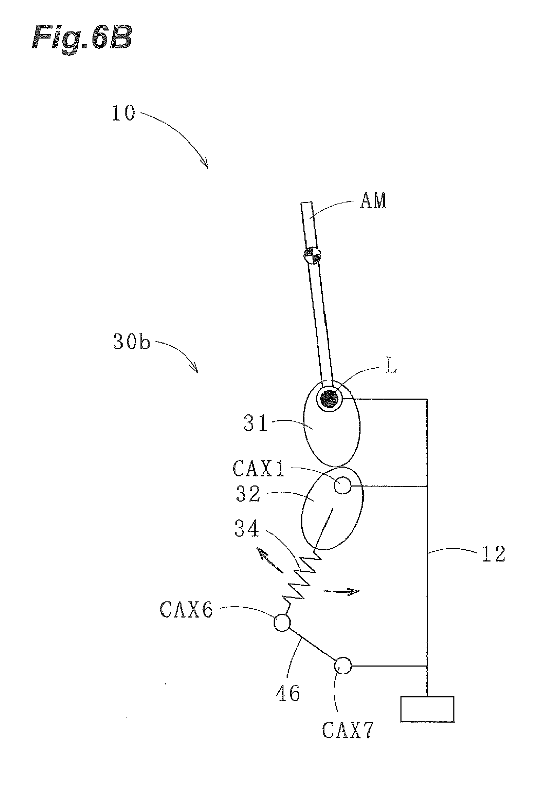

A second exemplary configuration may be a gravity compensation mechanism 30b illustrated in Fig. 6B.

One end portion of an extension/contraction body 34 of the gravity compensation mechanism 30b is coupled to the central portion of a second non-circular gear 32 without a coupling shaft in between. The entire extension/contraction body 34 rotates about a coupling shaft CAX1 as the second non-circular gear 32 rotates (see the arrow shown in Fig. 6B). The other end portion of the extension/contraction body 34 is coupled to one end of a link 46 via a coupling shaft CAX6. The other end portion of the link 46 is coupled to a swing part 12 via a coupling shaft CAX7.

The length of the extension/contraction body 34 rotating together with the second non-circular gear 32 therefore changes according to the rotational position of the second non-circular gear 32 (posture of the link 46). That is, the extension/contraction body 34 extends and contracts according to the tilt of the arm AM, so that the gravity compensation mechanism 30b can output gravity compensation torque according to a predetermined property.

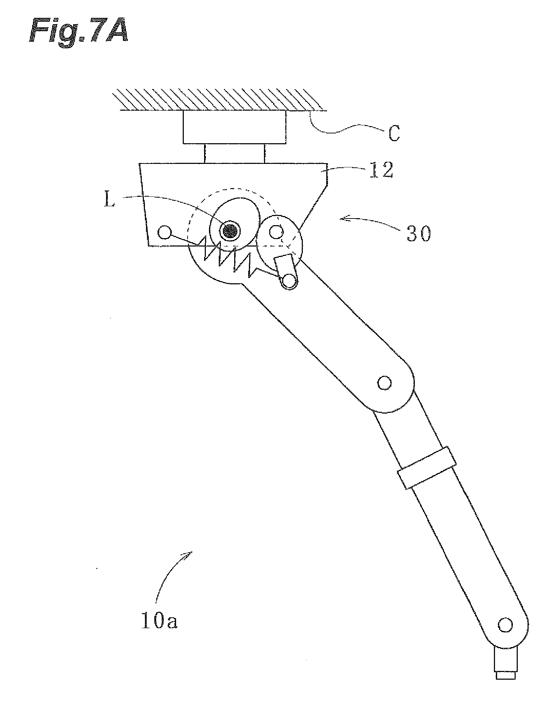

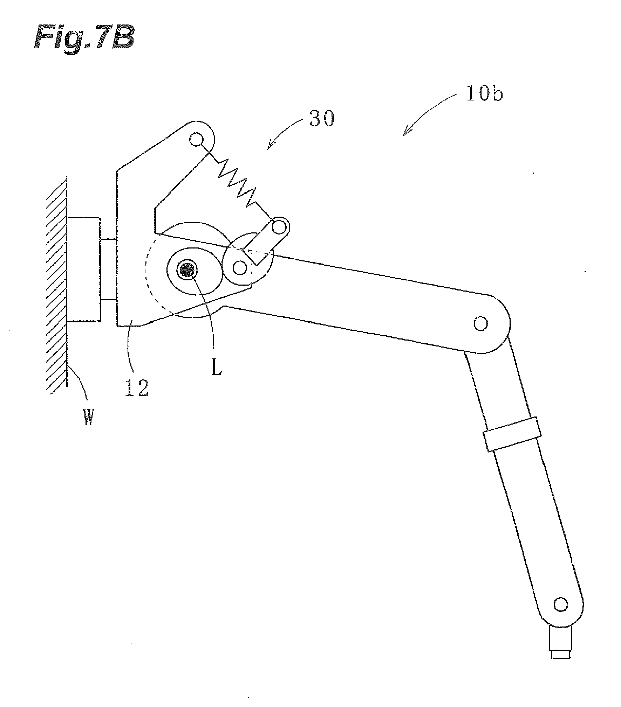

The robot may be a so-called suspended robot 10a of which swing part 12 is mounted on a ceiling C as illustrated in Fig. 7A. Further, the robot may be a so-called wall-mounted robot 10b of which swing part 12 is mounted on a wall W as illustrated in Fig. 7B.

### Second Exemplary Embodiment

A robot 100 according to a second exemplary embodiment of the present invention will be described. The same components as the robot 10 according to the first exemplary embodiment are appended with the same reference signs and detailed description will be omitted.

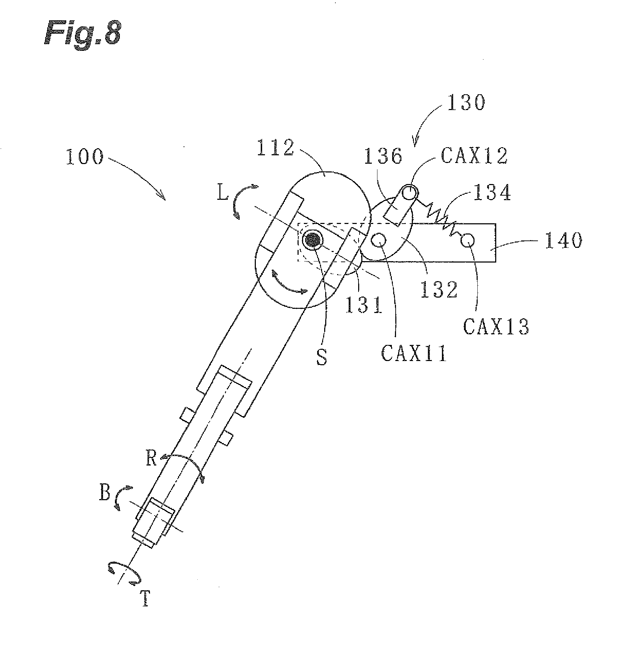

The robot 100 is, for example, an industrial robot with six-axes as illustrated in Fig. 8.

A swing part 112 of the robot 100 is mounted on a wall and can swing about a pivot S which intersects with a vertical axis. That is, the robot 100 is a wall-mounted robot. Fig. 8 illustrates the wall-mounted robot 100 viewed in a direction facing the wall.

In the first exemplary embodiment, the gravity compensation mechanism 30 is used for the rotation about the rotation axis L. In the second exemplary embodiment, a gravity compensation mechanism 130 is used for the rotation about a pivot S.

The gravity compensation mechanism 130 includes a first non-circular gear 131 which is a driving gear, a second non-circular gear 132 which is a follower gear, and an extension/contraction body 134.

The first non-circular gear 131 has, for example, an elliptic shape. The first non-circular gear 131 is configured to rotate about the pivot S of the swing part 112 together with the swing part 112. The pivot S passes a position offset from the central portion of the first non-circular gear 131 in a front view.

The second non-circular gear 132 has, for example, an elliptic shape. The second non-circular gear 132 meshes with and is driven by the first non-circular gear 131. The second non-circular gear 132 can rotate about a coupling shaft CAX11. The coupling shaft CAX11 is arranged to be offset from the central portion of the second non-circular gear 132 in a front view. The coupling shaft CAX11 is provided in a fixed member 140 fixed on the wall which is a mounting surface.

The extension/contraction body 134 extends and contracts as the second non-circular gear 132 rotates to produce force along the direction of extension and contraction. Examples of the extension/contraction body 134 include a coil spring and an air spring.

One end portion of the extension/contraction body 134 is rotatably coupled to the second non-circular gear 132 via a coupling shaft CAX12 provided in the second non-circular gear 132. The coupling shaft CAX12 is provided in a connecting member 136 fixed to the second non-circular gear 132. The coupling shaft CAX12 is arranged at a positon offset from the central portion of the second non-circular gear 132 in a front view and being the opposite side of the coupling shaft CAX1 with the central portion therebetween.

The other end portion of the extension/contraction body 134 is rotatably connected to the fixed member 140 via a coupling shaft CAX13 provided in the fixed member 140.

When the swing part 112 swings, viewing in the direction of the pivot S, the center of gravity of the arm changes according to the swing angle. As a result, the gravitational force acting on the center of gravity produces gravitational torque about the pivot S. At this time, as the swing part 112 swings, the extension/contraction body 134 extends and contracts to produce force, whereby the gravity compensation mechanism 130 can produce gravity compensation torque to cancel the gravitational torque.

Since the gravity compensation mechanism 130 includes the first non-circular gear 131 and the second non-circular gear 132, by changing the shapes of these non-circular gears, a high flexibility in designing a gravity compensation torque property is ensured.

Note that, the present invention is not limited to the exemplary embodiments described above. Modifications can be made without changing the spirit of the present invention. For example, configurations of the present invention made by combining a portion or the entire part of the exemplary embodiments and the exemplary modification described above also fall within the technical scope of the present invention.

In the exemplary embodiments described above, the robot is not limited to an industrial robot with six axes. The number of joints of the robot may arbitrarily be determined. The gravity compensation mechanism can be applied to, for example, an arm part or a leg part of a humanoid robot.

### Reference Signs List

- 10, 10a, 10b: robot
- 12: swing part
- 14: first arm part
- 16: second arm part
- 18: third arm part
- 22: wrist part
- 24: flange part
- 30: gravity compensation mechanism
- 30a: gravity compensation mechanism
- 30b: gravity compensation mechanism
- 31: first non-circular gear
- 32: second non-circular gear
- 34: extension/contraction body
- 36: connecting member
- 42: guide
- 44, 46: link
- 100: robot
- 112: swing part
- 130: gravity compensation mechanism
- 131: first non-circular gear
- 132: second non-circular gear
- 134: extension/contraction body
- 136: connecting member
- 140: fixed member
- AM: arm
- C: ceiling
- CAX1: coupling shaft
- CAX2: coupling shaft
- CAX3: coupling shaft
- CAX5: coupling shaft
- CAX6: coupling shaft
- CAX7: coupling shaft
- CAX11: coupling shaft
- CAX12: coupling shaft
- CAX13: coupling shaft
- CG: center of gravity
- F: floor
- S: pivot
- L, U, R, B, T: rotation axis
- W: wall

## Claims

1. A gravity compensation mechanism comprising:
a first non-circular gear configured to rotate about a rotation axis of an arm part of a robot together with the arm part;
a second non-circular gear driven by the first non-circular gear; and
an extension/contraction body configured to extend and contract to produce force as the second non-circular gear rotates, one end portion of the extension/contraction body being connected to the second non-circular gear.

2. The gravity compensation mechanism according to claim 1,
wherein the extension/contraction body is a coil spring.

3. The gravity compensation mechanism according to claim 1,
wherein the extension/contraction body is an air spring.

4. The gravity compensation mechanism according to any one of claims 1 to 3,
wherein the robot includes a swing part configured to swing about a pivot which intersects with a vertical axis,
the swing part is provided in place of the arm part, and
the pivot of the swing part is provided in place of the rotation axis of the arm part.

5. A robot comprising
a gravity compensation mechanism including
a first non-circular gear configured to rotate about a rotation axis of an arm part of the robot together with the arm part,
a second non-circular gear driven by the first non-circular gear, and
an extension/contraction body configured to extend and contract to produce force as the second non-circular gear rotates, one end portion of the extension/contraction body being connected to the second non-circular gear.
